# FASCICULE DE BREVET EUROPEEN

(11) **EP 3 917 191 B1**
(45) Date de publication et mention de la délivrance du brevet: **12.08.2026**
(21) Numéro de dépôt: 21176151.5
(22) Date de dépôt: 27.05.2021
(51) Int. Cl.: H04W 12/104, H04W 12/06, H04W 12/63, H04W 12/77, H04L 9/40, H04L 9/08

(54) **PROCÉDÉ DE FOURNITURE DE PREUVE DE PRÉSENCE**
VERFAHREN ZUR BEREITSTELLUNG VON ANWESENHEITSBEWEISEN
METHOD FOR THE PROVISION OF PROOF OF PRESENCE

(30) Priorité: 27.05.2020 FR 2005583
(43) Date de publication de la demande: 01.12.2021
(73) Titulaire: TAQT SOLUTIONS, 73100 Aix-Les-Bains (FR)
(72) Inventeur: CHAMBARD, Jérôme, 73000 CHAMBÉRY (FR); SIEBERT, Christophe, 73490 LA RAVOIRE (FR)
(74) Mandataire: Novaimo

(56) Documents cités:
- EP-A1- 2 747 444
- EP-A1- 3 203 444
- US-A1- 2018 285 546

## Description

### Domaine Technique de l'invention

L'invention concerne un procédé de fourniture de preuve de présence à un emplacement prédéfini, sur la base du scan d'un code matriciel. L'invention porte aussi sur un équipement numérique comprenant un écran apte à afficher un code matriciel dynamique. L'invention porte encore sur un système de fourniture de preuves de présence à un emplacement prédéfini.

### Etat de la technique antérieure

Dans de nombreux domaines, il existe un besoin de signaler ou de prouver la présence d'une personne en un lieu particulier. Par exemple dans le domaine du service à la personne, des employés peuvent être amenés à effectuer une tournée passant par différents lieux. Pour contrôler à distance le bon déroulement d'une tournée, différents systèmes ont été proposés.

Tout d'abord, on connaît des systèmes de fourniture de preuves de présence tels que des badgeuses comprenant un boitier électronique équipé d'un bouton. Le boîtier est relié par une connexion filaire ou une connexion sans fil à un serveur distant. Lorsqu'un utilisateur presse le bouton, le serveur reçoit une information attestant de la présence d'une personne auprès dudit boîtier. Ces systèmes sont complexes à mettre en œuvre car ils requièrent un boîtier alimenté en énergie et relié par des moyens de connexion au serveur. De plus, ces systèmes ne permettent pas d'identifier la personne qui a pressé le bouton. Ce dernier peut être pressé par toute personne, ce qui conduit à des signalements de présence à tort. Enfin, de tels systèmes requièrent un contact entre un doigt de l'utilisateur et le bouton. Par mesure d'hygiène et/ou pour éviter la transmission de maladies, il est préférable d'éviter autant que possible les contacts avec des boutons que d'autres personnes auraient pu manipuler auparavant.

On connaît aussi des systèmes de fourniture de preuves de présence sans contact reposant sur la technologie NFC (acronyme de Near Field Communication). De tels systèmes permettent certes de prouver la présence d'un utilisateur sans contact et de l'identifier, mais ces solutions sont complexes à mettre en œuvre requièrent que chaque utilisateur soit équipé d'un badge NFC spécifique.

Enfin, on connaît également des systèmes de fourniture de preuves de présence reposant sur l'utilisation de codes matriciels comme par exemple des QR codes. Un code matriciel donné est imprimé et fixé à un emplacement prédéfini. Lorsqu'une personne souhaite attester sa présence en cet emplacement, elle scanne le code matriciel avec son smartphone. Cette opération entraine l'émission d'un message vers un serveur connecté au smartphone qui enregistre la présence. De tels systèmes présentent l'avantage d'être sans contact et simples à mettre en place. Toutefois, ils peuvent être facilement détournés. En effet un utilisateur mal intentionné peut prendre une photo du code matriciel, imprimer cette photo puis renouveler l'opération de scan du code matriciel depuis n'importe quel endroit.

Pour surmonter cette difficulté, on connaît enfin des systèmes de fourniture de preuves de présence comprenant un équipement apte à afficher des codes matriciels variables. Les codes matriciels sont communiqués par l'équipement à un serveur. Lorsqu'une personne souhaite attester sa présence à cet emplacement, elle scanne le code matriciel avec son smartphone. Cette opération entraine l'émission d'un message vers un serveur connecté au smartphone. Le serveur peut ensuite comparer d'une part le code matriciel reçu en provenance du smartphone et d'autre part le code matriciel communiqué directement par l'équipement. Si ces deux codes sont identiques, on peut en déduire qu'un utilisateur était bien présent au lieu prédéfini pour scanner le code matriciel. Un tel système est plus fiable mais il est complexe à mettre en œuvre, notamment car il requiert des moyens de communications entre l'équipement et le serveur et que l'équipement soit branché sur le réseau électrique.

L'état de la technique est par example connu de par US2018285546A1 qui décrit un procédé de fourniture de preuve de présence à un emplacement prédéfini, sur la base d'un code.

### Présentation de l'invention

Le but de l'invention est de fournir un système et un procédé de fourniture de preuve de présence remédiant aux inconvénients ci-dessus et améliorant les système et procédés de fourniture de preuve de présence connus de l'art antérieur.

L'invention est définie par les revendications annexées.

Plus précisément, un premier objet de l'invention est un système et un procédé de fourniture de preuve de présence simple à installer, notamment ne requérant pas de moyens de communication entre un équipement et un serveur.

Un deuxième objet de l'invention est un système et un procédé de fourniture de preuve de présence infalsifiable.

Un troisième objet de l'invention est un système et un procédé de fourniture de preuve de présence sans contact.

### Résumé de l'invention

L'invention se rapporte à un procédé de fourniture de preuve de présence à un emplacement prédéfini, le procédé comprenant :
- une étape d'initialisation durant laquelle des données d'initialisation d'un équipement numérique sont transmises à un serveur, l'équipement étant installé audit emplacement prédéfini, l'équipement étant pourvu d'un écran apte à afficher un code matriciel, les données d'initialisation comprenant : un index de démarrage, au moins un paramètre de calcul, et une donnée de fréquence de rafraîchissement, puis
- une étape de calcul itératif par l'équipement, selon la fréquence de rafraîchissement, d'un index temporel, l'index temporel étant égal au résultat d'une opération basée sur l'au moins un paramètre de calcul et sur l'index temporel calculé lors d'une précédente itération de l'étape de calcul, une valeur initiale de l'index temporel étant égale au résultat d'une opération basée sur l'au moins un paramètre de calcul et sur l'index de démarrage, puis
- une étape d'affichage d'un code matriciel de validation sur l'écran de l'équipement, le code matriciel de validation comprenant l'index temporel calculé, puis
- une étape de validation d'une présence à l'emplacement prédéfini comprenant une sous-étape de scan du code matriciel de validation affiché sur l'écran de l'équipement au moyen d'un terminal de communication, puis une sous-étape de transmission au serveur, par le terminal de communication, de l'index temporel issu du code matriciel de validation scanné.

Le code matriciel de validation peut comprendre en outre une adresse informatique du serveur.

L'étape d'initialisation peut comprendre une sous-étape de transmission au serveur des données d'initialisation au moyen d'un terminal de communication, notamment un smartphone.

L'étape d'initialisation peut comprendre:
- une sous-étape d'affichage sur l'écran de l'équipement d'un code matriciel d'initialisation comprenant une adresse informatique du serveur et lesdites données d'initialisation, puis
- une sous-étape de scan par un terminal de communication du code matriciel d'initialisation, puis
- une sous-étape de transmission au serveur, par le terminal de communication, des données d'initialisation issues du code matriciel d'initialisation scanné.

L'étape d'initialisation peut être automatiquement exécutée dès la mise sous tension de l'équipement, ladite sous-étape d'affichage ayant une durée prédéfinie, notamment une durée comprise entre dix secondes et dix minutes inclues.

L'index de démarrage et/ou l'au moins un paramètre de calcul peut être défini aléatoirement par l'équipement.

Le procédé de fourniture de preuve de présence peut comprendre une étape de cryptage par l'équipement des données d'initialisation, notamment selon un cryptage XOR ou AES, puis une étape de décryptage par le serveur des données d'initialisation reçues, et/ou il peut comprendre une étape de cryptage par l'équipement de l'index temporel calculé, notamment selon un cryptage XOR ou AES, puis une étape de décryptage par le serveur de l'index temporel reçu.

Les données d'initialisation et/ou le code matriciel de validation peuvent comprendre une valeur de tension d'un moyen de stockage d'énergie de l'équipement.

L'étape d'initialisation et/ou l'étape de validation d'une présence à l'emplacement prédéfini peut comprendre en outre la transmission au serveur, par le terminal de communication, d'un identifiant du terminal de communication et/ou d'un identifiant d'un utilisateur du terminal de communication et/ou d'un identifiant de l'équipement et/ou d'une donnée d'horodatage indiquant l'heure à laquelle le code matriciel de validation a été scanné.

L'étape de validation d'une présence à l'emplacement prédéfini peut comprendre une sous-étape de comparaison par le serveur de l'index temporel reçu du terminal de communication avec un index temporel calculé par le serveur selon une méthode identique à celle employée par l'équipement pour calculer l'index temporel lors de ladite étape de calcul.

L'invention se rapporte également à un équipement numérique comprenant un écran apte à afficher un code matriciel dynamique, un moyen de stockage d'énergie et des moyens matériels et logiciels configurés pour générer aléatoirement au moins un paramètre de calcul et un index de démarrage, et pour calculer itérativement, selon une fréquence de rafraîchissement, un index temporel, l'index temporel étant égal au résultat d'une opération basée sur l'au moins un paramètre de calcul et sur un index temporel calculé lors d'une précédente itération, une valeur initiale de l'index temporel étant égale à l'index de démarrage.

L'équipement peut comprendre un dispositif d'affichage à encre électronique.

L'équipement peut comprendre un moyen de production d'énergie électrique, notamment un moyen photovoltaïque.

L'équipement peut comprendre des moyens de fixation destinés à coopérer avec un support, les moyens de fixation étant configurés de sorte qu'une manipulation des moyens de fixation pour désolidariser l'équipement du support entraîne une déconnexion du moyen de stockage d'énergie.

L'invention se rapporte également à un système de fourniture de preuves de présence comprenant un serveur, et un équipement pourvu d'un écran apte à afficher un code matriciel dynamique et/ou un équipement tel que défini précédemment, l'équipement et le serveur comprenant des moyens matériels et logiciels configurés pour mettre en œuvre un procédé de fourniture de preuve de présence tel que défini précédemment.

L'invention se rapporte également à un produit programme d'ordinateur comprenant des instructions de code de programme enregistrées sur un support lisible par ordinateur pour mettre en œuvre les étapes du procédé de fourniture de preuve de présence tel que défini précédemment lorsque ledit programme fonctionne sur un ordinateur.

L'invention se rapporte également à un support d'enregistrement de données, lisible par un ordinateur, sur lequel est enregistré un programme d'ordinateur comprenant des instructions de code de programme de mise en œuvre du procédé de fourniture de preuve de présence tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 est une vue schématique d'un système de fourniture de preuves de présence selon un mode de réalisation de l'invention.
[Fig. 2] La figure 2 est un synoptique d'un procédé de fourniture de preuve de présence selon un mode de réalisation de l'invention.

### Description détaillée

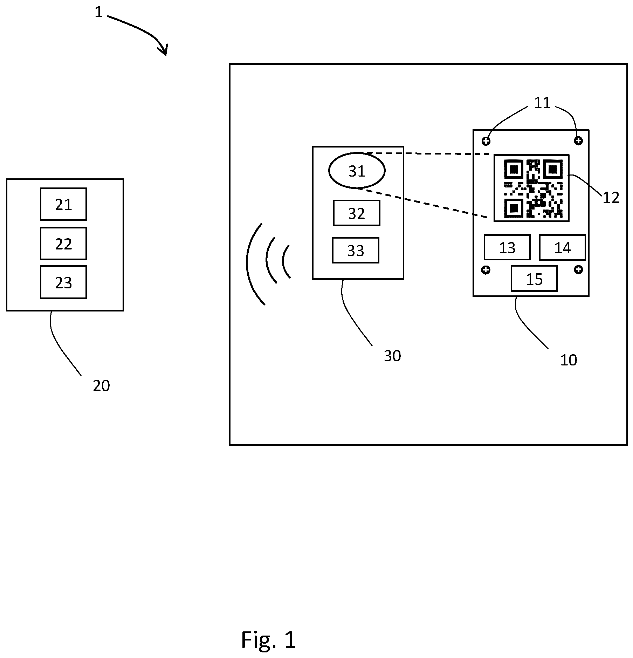

La figure 1 illustre schématiquement un système de fourniture de preuves de présence 1 selon un mode de réalisation de l'invention. Un système de fourniture de preuves de présence est un système de contrôle visant à signaler et/ou à attester la présence d'une personne ou d'un produit en un lieu déterminé. Un tel système peut notamment être utilisé pour vérifier la bonne réalisation d'une tournée en différents lieux géographiques. Selon un exemple particulier, et de manière non limitative, le système de fourniture de preuves de présence peut par exemple servir à attester le passage ou la présence d'un employé dans différentes pièces d'un bâtiment, par exemple pour y effectuer une prestation d'entretien ou de nettoyage. D'autres exemples d'application de l'invention seront développés ultérieurement.

Le système de fourniture de preuves de présence, désigné plus simplement par le "système 1", comprend d'une part au moins un équipement numérique 10 et d'autre part un serveur 20.

L'équipement numérique 10 est installé à un emplacement prédéfini. Cet emplacement peut être par exemple un lieu privé, tel qu'un bureau, une salle ou une partie commune dans un établissement. L'emplacement prédéfini peut être situé dans une zone à accès protégé. Il peut également être positionné en extérieur, par exemple devant un bâtiment, un immeuble ou une maison particulière. Ledit emplacement prédéfini peut également être situé dans un lieu public comme par exemple une gare, un hôpital, un établissement administratif. Il peut également être embarqué dans un moyen de transport public comme par exemple un train ou un bus.

L'équipement 10 numérique comprend des moyens de fixation 11 agencés pour fixer l'équipement numérique à l'emplacement prédéfini. Ces moyens de fixation peuvent comprendre par exemple des trous de fixations et/ou des vis et/ou des rivets et/ou de la colle. Avantageusement, l'équipement de fixation est fixé à demeure sur un support inamovible à l'emplacement prédéfini et ne peut pas en être facilement détaché ou déplacé.

L'équipement 10 comprend également un écran 12 apte à afficher un code matriciel dynamique, c'est-à-dire un code matriciel variable dans le temps. Un code matriciel peut être un code en deux dimensions formant un quadrillage dans lequel des cellules sont affichées en deux couleurs distinctes (par exemple noir ou blanc). Le code matriciel peut être par exemple un code Datamatrix et/ou un QR code. Avantageusement, le code matriciel affiché sur l'écran 12 de l'équipement 10 est un code standardisé. Il peut par exemple être conforme à la norme ISO/CEI 16022. Le code matriciel peut ainsi être un code déchiffrable automatiquement par un terminal de communication comme un smartphone, sans installation préalable d'une application ou d'une clé de décryptage dédiée. Plus généralement, un code matriciel peut désigner tout code contenant une information numérique. La résolution de l'écran 12 peut être suffisante pour afficher un code matriciel d'environ 200 cellules en abscisse et 200 cellules en ordonnées. Ainsi, l'écran 12 peut être particulièrement simple puisqu'il peut se limiter à un écran monochrome d'environ 200 pixels sur 200 pixels. Avantageusement, un code matriciel permet d'afficher une grande quantité d'informations sur une surface réduite. La taille de l'écran peut être suffisamment grande pour permettre à une caméra de smartphone de détecter et de lire le code matriciel affiché.

Selon un mode de réalisation préférentiel, l'équipement 10 peut comprendre un dispositif d'affichage à encre électronique, également dénommé "e-ink" ou "e-paper". Un tel dispositif repose sur une technologie également employée dans la conception de liseuses électroniques. Il présente l'avantage d'être très peu consommateur d'énergie.

L'équipement 10 comprend en outre une mémoire 13, une unité de calcul 14 ou microprocesseur et un moyen de stockage d'énergie 15 comme par exemple une pile ou une batterie rechargeable. La mémoire 13 et l'unité de calcul 14 peuvent être intégrés à une carte électronique reliée à l'écran 12 par l'intermédiaire d'une nappe. Le moyen de stockage d'énergie 15 permet d'alimenter en énergie l'écran 12 et l'unité de calcul 13. L'équipement 10 ne requiert aucun raccordement à un réseau électrique. De plus, l'équipement peut ne comprendre aucun moyen de connexion filaire ou sans fil. Il peut également ne comprendre aucun bouton, ni aucun autre moyen d'interaction que l'écran 12. Ainsi, la conception de l'équipement est particulièrement simple et robuste.

Selon une variante de réalisation, l'équipement pourrait toutefois comprendre un bouton ou moyen de commande configuré pour allumer ou éteindre l'écran 12 afin d'économiser de l'énergie. Selon une autre variante de réalisation, l'équipement 10 pourrait aussi comprendre un bouton reset pour réinitialiser l'équipement et ainsi relancer une étape d'initialisation du procédé qui sera détaillée par la suite. Dans une telle éventualité le bouton reset serait avantageusement bien caché et/ou difficile d'accès pour éviter toute utilisation malveillante de l'équipement.

L'équipement 10 peut être dédié à la mise en œuvre d'un procédé de fourniture de preuve. Il peut également être intégré à tout support et/ou à tout dispositif assurant différentes fonctions à partir du moment où celui-ci comprend un espace suffisant pour y intégrer l'écran 12 et la carte électronique reliée à l'écran.

De manière optionnelle, l'équipement 10 peut comprendre un moyen de production d'énergie électrique, notamment un moyen photovoltaïque. Le moyen photovoltaïque pourrait par exemple être agencé derrière l'écran 12 ou à côté de cet écran. Ainsi, l'équipement 10 pourrait bénéficier d'une autonomie énergétique augmentée, voir même être rendu complètement autonome.

Le serveur 20 est un dispositif informatique. Il comprend des moyens de communication 21, notamment pour recevoir des informations numériques en provenance d'un terminal de communication tel qu'un smartphone. Il comprend également une mémoire 22 et une unité de calcul 23 ou microprocesseur.

Les mémoires 13 et 22 sont des supports d'enregistrement de données, lisibles par un ordinateur, sur lesquels sont enregistrés des programmes d'ordinateur comprenant des instructions de code de programme de mise en œuvre d'un procédé de fourniture de preuve de présence selon un mode de réalisation de l'invention. Les unités de calcul 14, 23 sont aptes à exécuter les programmes enregistrés respectivement dans les mémoires 13 et 22.

La mise en œuvre du procédé de fourniture de preuve de présence repose également sur l'utilisation d'un terminal de communication 30 tel qu'un smartphone. Le terminal de communication 30 comprend une caméra 31, des moyens de communication 32 pour émettre des données vers le serveur 20 et une unité de calcul 33, notamment apte à déchiffrer un code matriciel. Avantageusement, ces moyens 31, 32 et 33 équipent aujourd'hui tous les smartphones commercialisés. En variante, le terminal de communication 30 pourrait ne pas être un smartphone mais un simple appareil électronique dont les fonctionnalités sont limitées à la mise en œuvre de l'invention. Dans le mode de réalisation décrit, le terminal de communication 30 peut être détenu par un utilisateur dont on cherche à attester la présence à l'emplacement prédéfini. Avantageusement, le terminal de communication peut en outre comprendre une mémoire dans laquelle est enregistré un identifiant du terminal de communication et/ou un identifiant de l'utilisateur.

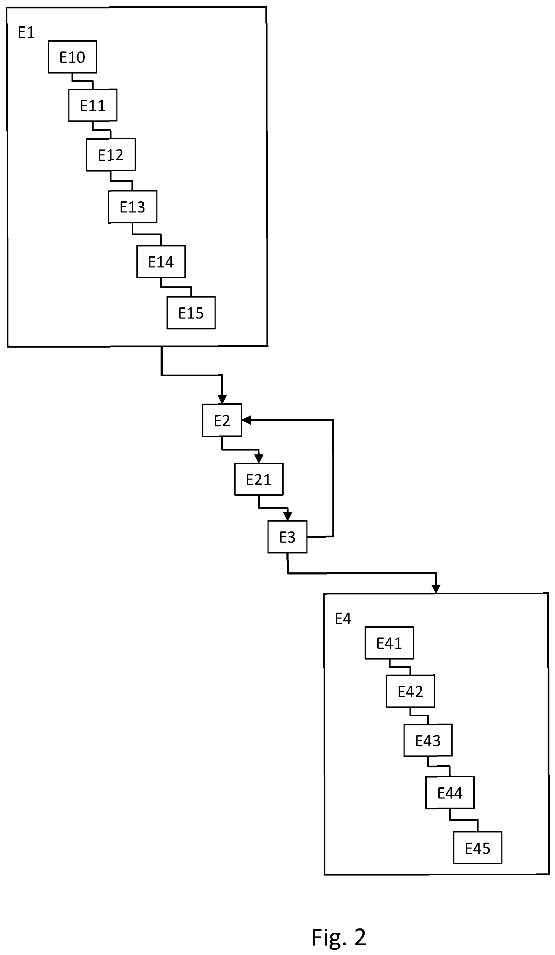

On décrit à présent un mode de réalisation du procédé de fourniture de preuve de présence en relation avec la figure 2. Le procédé peut être décomposé en quatre étapes principales E1, E2, E3 et E4.

La première étape E1 est une étape d'initialisation. Lors de cette étape, on transmet des données d'initialisation de l'équipement 10 au serveur 20. Ces données d'initialisation comprennent :
- un index de démarrage INDD,
- au moins un paramètre de calcul INCA,
- une donnée de fréquence de rafraîchissement FMIN.

Le nombre de paramètres de calcul peut être quelconque. Toutefois, le procédé peut déjà être mis en œuvre avec un unique paramètre de calcul. Les explications qui suivent pourront facilement être transposées à un procédé plus complexe reposant sur l'utilisation de plusieurs paramètres de calcul.

Selon un mode de réalisation préféré de l'invention, l'index de démarrage INDD et le paramètre de calcul INCA sont générés aléatoirement par l'équipement 10. L'index de démarrage INDD et le paramètre de calcul INCA peuvent être par exemple générés automatiquement et aléatoirement dès que l'équipement est mis sous tension, c'est-à-dire dès la connexion du moyen de stockage d'énergie 15. Ainsi, aucun bouton de commande n'est requis sur l'équipement pour sa mise en service. Comme nous le verrons par la suite, des codes matriciels de validation seront ensuite générés périodiquement en fonction de l'index de démarrage INDD et du paramètre de calcul INCA. L'avantage de définir aléatoirement ces deux paramètres est de rendre plus difficile la prédiction des codes matriciels qui seront générés par l'équipement.

Selon une variante de réalisation, l'index de démarrage INDD et le paramètre de calcul INCA pourraient non pas être définis aléatoirement mais être définis selon un algorithme plus ou moins complexe et donc plus ou moins difficile à déceler. Selon une autre variante, plus simpliste, l'index de démarrage INDD et le paramètre de calcul INCA pourrait être définis lors de la fabrication de l'équipement. Selon cette variante, l'équipement pourrait être plus simple à fabriquer et l'étape d'initialisation pourrait être plus rapide. Toutefois, dans ce cas, les codes matriciels de validation générés par l'équipement pourraient être plus facilement décelés.

La donnée de fréquence de rafraîchissement FMIN, ou fréquence FMIN, peut être une valeur prédéfinie lors de la fabrication de l'équipement. Comme nous le verrons par la suite, la fréquence FMIN correspond à la fréquence selon laquelle des codes matriciels générés et affichés par l'équipement sont renouvelés. Cette fréquence FMIN peut être quelconque. Elle peut être par exemple de l'ordre d'une seconde, d'une minute, d'une heure, d'une journée, ou encore d'une semaine. L'équipement 20 comprend donc une horloge interne permettant de renouveler lesdits codes matriciels selon la fréquence FMIN.

Selon une variante de réalisation de l'invention, l'équipement pourrait comprendre un moyen de réglage de la fréquence FMIN. La fréquence FMIN serait définie lors de l'étape d'initialisation et ne serait par la suite plus modifiée, sauf si l'équipement est réinitialisé.

Avantageusement, lorsque les données d'initialisation sont générées par l'équipement, celles-ci peuvent être transmises de l'équipement vers le serveur par l'intermédiaire du Smartphone 30. Dans ce cas, l'étape d'initialisation E1 peut comprendre une première sous-étape E11 dans laquelle on affiche sur l'écran 12 de l'équipement 10 un code matriciel d'initialisation. Le code matriciel d'initialisation peut alors comprendre une adresse informatique du serveur, autrement dit une adresse URL du serveur, et lesdites données d'initialisation. L'adresse informatique du serveur peut être présentée sous une forme telle que le terminal de communication se connecte automatique au serveur 20 lorsqu'on scanne le code matriciel d'initialisation, c'est-à-dire lorsqu'on active la caméra du terminal de communication en vis-à-vis du code matriciel d'initialisation. Le code matriciel d'initialisation peut contenir un message de la forme : http(s)://zz.xxx.yy?s=<<cryptojeton_init>> , où http(s)://zz.xxx.yy désigne l'adresse informatique du serveur et cryptojeton_init contient les données d'initialisation. La donnée cryptojeton_init peut être par exemple obtenue par la concaténation des différentes données d'initialisation.

Le code matriciel d'initialisation peut rester affiché sur l'écran 12 de l'équipement pendant une durée prédéfinie, par exemple comprise entre dix secondes et dix minutes inclues, notamment une durée d'environ une minute. Cette durée peut être calculée à partir de la génération des données d'initialisation et/ou à compter de la mise sous tension de l'équipement. On peut choisir une durée qui laisse le temps à l'utilisateur de scanner confortablement le code matriciel affiché sur l'écran. Avantageusement, le code matriciel n'est pas un code directement intelligible par l'utilisateur. Il est également impossible de le mémoriser dès lors qu'il dépasse une certaine taille. Cela renforce la sécurité du procédé selon l'invention.

Dans une deuxième sous-étape E12, on scanne le code matriciel d'initialisation avec la caméra 31 du terminal de communication 30. Avantageusement, lorsque le code matriciel d'initialisation contient un message sous la forme http(s)://zz.xxx.yy?s=<<cryptojeton_init>>, le terminal de communication 30 communique automatiquement la donnée cryptojeton_init contenant les données d'initialisation au serveur 20. Cette sous-étape peut donc être exécutée très simplement puisque l'utilisateur n'a besoin que d'activer la caméra de son terminal de communication, de viser le code matriciel d'initialisation affiché sur l'écran 12 et de valider la proposition de connexion vers le serveur qui s'affiche automatiquement.

En variante, le message contenu dans le code matriciel d'initialisation pourrait prendre toute autre forme permettant une transmission automatique des données d'initialisation au serveur. Selon une autre variante, le code matriciel d'initialisation pourrait ne pas contenir l'adresse informatique du serveur. Les données d'initialisation pourraient alors être transmises manuellement vers le serveur 20 ou au moyen d'une application dédiée pour terminal de communication. Toutefois, une telle variante serait plus longue à mettre en œuvre et requerrait, le cas échéant, l'installation d'une application sur le terminal de communication.

Selon une autre particularité de l'invention, tout ou partie des données d'initialisation peuvent être préalablement cryptées avant d'être affichées sur l'écran 12. Le cryptage vise à empêcher l'interception de l'index de démarrage INDD et/ou du paramètre de calcul INCA lors de l'affichage du code matriciel d'initialisation. Notamment, un cryptage de type XOR peut être utilisé. Un tel cryptage est basé sur l'utilisation d'une clé de cryptage secrète et d'un opérateur logique correspondant à un "OU exclusif". Les données à crypter et la clé de cryptage sont convertis en langage binaire et chaque bit des données à crypter est crypté en utilisant la fonction "OU exclusif" avec la clé de cryptage, qui est répétée si elle est plus courte que les données à crypter. La clé secrète peut être mémorisée dans une mémoire de l'équipement 10. L'avantage d'un codage de type XOR est qu'il est simple à mettre en œuvre et complètement impossible à déchiffrer lorsqu'on ne connaît pas la clé secrète. De manière alternative, un cryptage de type AES (Advanced Encryption Standard) ou même tout autre type d'algorithme de cryptage peut être utilisé. Un cryptage AES est particulièrement sûr. Les données d'initialisation peuvent ainsi être cryptées dans une sous-étape E10 exécutée avant la sous-étape E11 d'affichage du code matriciel d'initialisation.

En complément et de manière optionnelle, les données d'initialisation peuvent comprendre d'autres informations utiles. Par exemple, les données d'initialisation peuvent comprendre en outre un nombre NBD de redémarrages effectués par l'équipement depuis sa mise en service. Ce nombre NBD pourra être exploité par la suite pour renforcer la sécurité des codes matriciels générés par l'équipement 10.

Les données d'initialisation peuvent également comprendre une valeur de tension TP du moyen de stockage d'énergie 15 de l'équipement 10. Cette valeur de tension peut être interprétée pour calculer une durée d'utilisation restante de l'équipement. Ainsi, on peut prévoir une opération de maintenance de l'équipement pour remplacer ou recharger le moyen de stockage d'énergie 15, avant que l'équipement ne cesse de fonctionner.

Dans une troisième sous-étape E13 de l'étape d'initialisation, le terminal de communication 30 transmet au serveur les données d'initialisation issues du code matriciel d'initialisation scanné. Lorsque les données d'initialisation sont cryptées, le serveur les décrypte. Le décryptage des données d'initialisation peut être exécuté au cours d'une sous-étape E14 suivant la sous-étape E13. A cet effet, le serveur peut aussi comprendre une clé de décryptage en mémoire, notamment la clé ayant servi à réaliser le codage de type XOR ou AES.

Ensuite, l'étape d'initialisation E1 peut comprendre une sous-étape E15 d'authentification pour s'assurer que l'étape d'initialisation E1 est exécutée par un utilisateur autorisé. Par exemple, en réponse à la réception par le serveur 20 des données d'initialisation, le serveur peut rediriger le terminal de communication 30 vers une interface dans laquelle l'utilisateur est invité à saisir un nom d'utilisateur et/ou un mot de passe. Le nom d'utilisateur et/ou le mot de passe saisis sont transmis du terminal de communication 30 au serveur 20. Le serveur 20 peut alors vérifier en consultant une base de données d'utilisateurs autorisés que l'utilisateur est bien autorisé à effectuer une initialisation du procédé. Si le nom d'utilisateur et/ou le mot de passe sont reconnus comme valides, le serveur pourra mémoriser les données d'initialisation reçues. Si le nom d'utilisateur et/ou le mot de passe ne sont pas reconnus comme valides, le serveur pourra simplement ignorer les données d'initialisation reçues. Ainsi l'initialisation du procédé ne peut être effectuée que par des personnes autorisées et la sécurité du procédé est encore renforcée.

La transmission des données d'initialisation étant immédiate ou quasiimmédiate lorsqu'on scanne le code matriciel d'initialisation, on peut considérer que le serveur 20 les reçoit instantanément ou à brève échéance consécutivement au scan du code matriciel d'initialisation. On parvient ainsi à synchroniser l'équipement 10 et le serveur 20. La synchronisation entre l'équipement 10 et le serveur 20 a alors une précision sensiblement égale à la durée pendant laquelle s'affiche le code matriciel d'initialisation. On comprend donc qu'une durée d'affichage du code matriciel d'initialisation relativement courte peut être souhaitable afin d'obtenir une synchronisation temporelle précise de l'équipement 10 et du serveur 20.

Avantageusement, lors de l'étape d'initialisation, le terminal de communication 30 peut aussi transmettre au serveur 20 un identifiant du terminal de communication et/ou un identifiant d'un utilisateur du terminal de communication et/ou un identifiant de l'équipement 10 et/ou une donnée d'horodatage indiquant l'heure à laquelle le code matriciel d'initialisation a été scanné. L'identifiant du terminal de communication peut être par exemple un numéro de série du terminal de communication ou tout autre référence permettant d'identifier le terminal de communication. L'identifiant de l'utilisateur du terminal de communication peut être par exemple un nom de l'utilisateur, une adresse de courrier électronique ou encore tout autre code permettant d'identifier l'utilisateur du terminal de communication. Ces identifiants peuvent être contenus dans une mémoire du terminal de communication et être joints automatiquement aux données d'initialisation transmis par le terminal de communication 30 au serveur 20. Ces identifiants pourraient également être saisis manuellement sur invitation du terminal de communication. L'identifiant de l'équipement 10 peut être par exemple un numéro de série de l'équipement. Avantageusement, il peut faire partie des données d'initialisation et donc être communiqué au terminal de communication 30 par l'affichage du code matriciel d'initialisation. Alternativement, il pourrait être saisi sur invitation du terminal de communication. Grâce à ces informations, le serveur pourra être en mesure d'associer un équipement donné à un ou plusieurs terminaux de communication et/ou à un ou plusieurs utilisateurs.

Finalement, à l'issue de l'étape d'initialisation, l'équipement 10 et le serveur 20 possède tous les deux en mémoire les données d'initialisation, à savoir au moins l'index de démarrage INDD, le paramètre de calcul INCA, et la fréquence FMIN. De plus, l'équipement 10 et le serveur 20 sont synchronisés de sorte à pouvoir calculer sensiblement simultanément un index temporel en fonction de ces données d'initialisation.

Dans une deuxième étape E2, l'équipement calcule un index temporel INDT de manière itérative et selon la fréquence FMIN. La deuxième étape E2 peut être exécutée automatiquement au terme de l'étape d'initialisation E1. Une valeur initiale de l'index temporel INDT est égale au résultat d'une opération basée sur le paramètre de calcul INCA et sur l'index de démarrage INDD. Ensuite, l'index temporel INDT est égal au résultat d'une opération basée sur le paramètre de calcul INCA et sur l'index temporel INDT calculé lors d'une précédente itération de la deuxième étape E2.

Le paramètre de calcul peut être par exemple un nombre qui sera additionné à l'index temporel INDT calculé lors d'une précédente itération. En variante, le paramètre de calcul peut être combiné avec l'index temporel INDT calculé lors d'une précédente itération selon tout type d'opération, notamment une multiplication une soustraction ou une division. Selon une autre variante, le type même d'opération est spécifié par le paramètre de calcul INCA ou par une partie du paramètre de calcul INCA. Par exemple, les deux premiers bits du paramètre de calcul INCA peuvent servir à définir si les bits suivants du paramètre de calcul INCA doivent être additionnés, multipliés soustraits ou divisé avec l'index temporel INDT calculé lors d'une précédente itération. Dans l'hypothèse où le procédé reposerait sur l'utilisation de plusieurs paramètres de calcul, on peut proposer des calculs encore plus complexes de l'index temporel INDT. Par exemple, on pourrait additionner un premier paramètre de calcul lors d'une itération de la deuxième étape E2 puis additionner un deuxième paramètre de calcul lors de l'itération suivante de la deuxième étape E2. Un tel procédé serait plus complexe à mettre en œuvre mais pourrait conduire à une sécurité renforcée du procédé de fourniture de preuve de présence contre les tentatives de le déchiffrer ou de le contourner. Le cas échéant, l'index temporel INDT peut également être calculé en fonction du nombre NBD de redémarrages effectués par l'équipement depuis sa mise en service.

Dans une troisième étape E3, on affiche un code matriciel de validation sur l'écran 12, le code matriciel de validation comprenant l'index temporel INDT calculé lors de la deuxième étape E2. Autrement dit, le code matriciel de validation est une représentation codée sous forme matricielle de l'index temporel INDT. Le code matriciel de validation affiché sur l'écran 12 est ainsi mis à jour selon la fréquence FMIN. Le premier code matriciel de validation peut s'afficher automatiquement dès que la durée prédéfinie pour l'affichage du code matriciel d'initialisation est écoulée. Un code matriciel de validation donné peut rester affiché sur l'écran jusqu'à ce qu'un nouveau code matriciel de validation le remplace. Ainsi, l'écran peut n'être rafraîchi que selon la fréquence FMIN ce qui permet d'économiser de l'énergie, en particulier lorsque l'écran 12 comprend un dispositif d'affichage à encre électronique.

Le code matriciel de validation est donc dépendant de l'index de démarrage INDD, du paramètre de calcul INCA, de la fréquence FMIN, et, le cas échéant, du nombre NBD de redémarrages effectués par l'équipement depuis sa mise en service.

Avantageusement, l'index temporel INDT peut être préalablement crypté avant d'être affiché sur l'écran 12. Le cryptage vise à rendre plus difficile, voire même impossible, la déduction de la méthode de calcul de l'index temporel INDT par observation des codes matriciels de validation affichés successivement. Notamment, un cryptage de type XOR ou AES peut être utilisé. Le cryptage de l'index temporel INDT peut reposer sur une clé secrète identique à la clé secrète utilisée pour le cryptage des données d'initialisation. L'index temporel INDT peut ainsi être crypté dans une sous-étape E21 exécutée après l'étape de calcul E2 de l'index temporel INDT et avant l'étape E3 d'affichage du code matriciel de validation.

De même que pour l'affichage du code matriciel d'initialisation, le code matriciel de validation peut comprendre d'autres données utiles en plus de l'index temporel INDT. Tout d'abord, le code matriciel peut comprendre l'adresse informatique du serveur 20, de sorte à ce que le terminal de communication se connecte automatique à ce serveur lorsqu'on scanne le code matriciel de validation. Le code matriciel de validation peut contenir un message de la forme : http(s)://zz.xxx.yy?s=<<cryptojeton_valid>> , où http(s)://zz.xxx.yy désigne l'adresse informatique du serveur et cryptojeton_valid contient l'index temporel INDT, le cas échéant sous forme cryptée.

De plus, le code matriciel de validation peut comprendre le nombre NBD de redémarrages effectués par l'équipement depuis sa mise en service. Le code matriciel de validation peut donc être non seulement calculé en fonction du nombre NBD mais également contenir cette information. Le code matriciel de validation peut également comprendre la valeur de tension TP du moyen de stockage d'énergie 15 de l'équipement 10.

Dans une quatrième étape E4, on valide la présence d'un utilisateur à l'emplacement prédéfini. Pour ce faire, un utilisateur est invité à scanner le code matriciel affiché sur l'écran de l'équipement au moment où il souhaite notifier sa présence à l'emplacement prédéfini. Plus précisément, la quatrième étape E4 comprend une sous-étape E41 de scan du code matriciel de validation affiché sur l'écran 12 au moyen de la caméra d'un terminal de communication. Ce terminal de communication peut être le même terminal de communication que celui utilisé pour l'étape d'initialisation ou, en variante, être un terminal de communication différent.

Ensuite, la quatrième étape E4 comprend une sous-étape E42 de transmission au serveur 20, par le terminal de communication, de l'index temporel INDT issu du code matriciel de validation scanné. On considère que le serveur 20 reçoit l'index temporel INDT instantanément ou à bref délai après le scan du code matriciel de validation. La sous-étape E42 peut être exécutée automatiquement lorsque le code matriciel de validation comprend l'adresse informatique du serveur 20. La quatrième étape E4 peut donc être exécutée très simplement puisque l'utilisateur n'a besoin que d'activer la caméra de son terminal de communication, de viser le code matriciel de validation affiché sur l'écran 12 et de valider la connexion au serveur proposée par son terminal de communication.

En plus de transmettre l'index temporel INDT, on peut transmettre dans une sous-étape E43 un identifiant du terminal de communication utilisé pour scanner le code matriciel de validation et/ou un identifiant de l'utilisateur du terminal de communication et/ou un identifiant de l'équipement sur lequel était affiché le code matriciel de validation et/ou une donnée d'horodatage indiquant l'heure à laquelle le code matriciel de validation a été scanné.

Lorsque l'index temporel a été crypté conformément à l'étape E21, la quatrième étape E4 comprend une sous-étape E44 de décryptage de l'index temporel, notamment au moyen de la clé secrète partagée avec l'équipement.

Ensuite, la quatrième étape E4 comprend une sous-étape E45 de comparaison par le serveur de l'index temporel INDT reçu du terminal de communication lors de la sous-étape E42 avec un index temporel INDT_B calculé par le serveur selon une méthode identique à celle employée par l'équipement pour calculer l'index temporel lors de l'étape de calcul E2.

Le serveur 20 disposant des données d'initialisation partagées lors de l'étape d'initialisation, il peut appliquer le même algorithme de calcul que l'équipement 10 pour calculer également un index temporel INDT_B. Il peut aussi renouveler ce calcul selon la fréquence FMIN. Le serveur peut donc prévoir à tout moment l'index temporel INDT calculé par l'équipement 10 sans avoir à établir une communication avec ce dernier. Si l'index temporel INDT est identique à l'index temporel INDT_B, on peut attester de manière fiable la présence d'un utilisateur à l'emplacement prédéfini. Si l'index temporel INDT est différent de l'index temporel INDT_B, on peut supposer qu'une tentative de fraude a eu lieu.

On peut également estimer le moment auquel cet utilisateur était présent à l'emplacement prédéfini. La fréquence FMIN pourra être adaptée en fonction de l'utilisation prévue du système de fourniture de preuves de présence. Notamment, s'il est utile de connaître avec précision le moment où l'utilisateur a scanné le code matriciel de validation, on pourra utiliser une fréquence de rafraîchissement FMIN plus élevée. L'exécution du procédé ne requiert que la manipulation par l'utilisateur de son propre terminal de communication. Le procédé est donc hygiénique et limite la transmission de maladies.

Grâce à l'invention, on dispose d'une grande sécurité à l'égard des tentatives de prédiction des codes matriciels de validation qui seront affichés dans le futur. Notamment, l'utilisation de données d'initialisation définies aléatoirement et l'application d'un cryptage des données affichées sous forme de codes matriciels offrent une double sécurité. Il est donc particulièrement difficile de falsifier une preuve de présence.

Une personne mal intentionnée cherchant à scanner un code matriciel de validation en un lieu différent du lieu initialement prévu serait contrainte de déplacer l'ensemble de l'équipement 10. Afin d'éviter un tel contournement, l'équipement peut comprendre des moyens de fixation 11 difficilement amovibles. On peut également prévoir des moyens de fixation 11 dont la manipulation requiert une déconnexion temporaire du moyen de stockage d'énergie 15. Par exemple, l'équipement 10 pourrait être fixé grâce à des vis de fixation et au moins une de ces vis de fixation pourrait comprendre une tête de vis à l'intérieur d'un logement prévu pour le moyen de stockage d'énergie 15. Ainsi, le déplacement de l'équipement 10 nécessiterait obligatoirement une mise hors tension de l'équipement et donc une désynchronisation avec le serveur 20. L'équipement 10 ne pourrait plus servir pour valider la présence d'un utilisateur avant de réaliser une nouvelle initialisation. Le nombre NBD peut éventuellement être surveillé afin de prévenir toute tentative de réinitialisation de l'équipement. Selon un autre exemple, l'équipement 10 pourrait être configuré de sorte que ses piles soient automatiquement éjectées en cas de désolidarisation de l'équipement de son support.

Si l'identifiant du terminal de communication et/ou l'identifiant de l'utilisateur du terminal de communication transmis lors de la sous-étape E43 ne correspondent pas à un identifiant enregistré par le serveur, notamment un identifiant enregistré dans le serveur lors de l'étape d'initialisation, le serveur peut ignorer le message reçu de la part du terminal de communication. On peut ainsi écarter toutes les tentatives de validation de présence effectuées avec un terminal de communication non autorisé et/ou par un utilisateur non autorisé. Si l'identifiant du terminal de communication et/ou l'identifiant de l'utilisateur du terminal de communication transmis lors de la sous-étape E43 correspondent bien à un identifiant enregistré par le serveur, alors la présence peut être enregistré et affecté à l'identifiant enregistré. Lorsque différents terminaux de communication et/ou différents utilisateurs sont enregistrés par le serveur comme autorisés à scanner un code matriciel de validation, on peut identifier lequel de ces terminaux de communication et/ou lequel de ces utilisateurs a scanné le code matriciel de validation. La sous-étape E44 peut être exécutée dès réception par le serveur 20 de l'index temporel envoyé par le terminal de communication ou, en variante, être exécutée plus tard, par exemple en fin de journée.

En remarque, la connaissance par le serveur 20 du code matriciel de validation affiché sur l'équipement 10 requiert une bonne synchronisation des horloges internes de l'équipement et du serveur. L'horloge interne de l'équipement et/ou du serveur peut comprendre une dérive par rapport à une base de temps de référence. La précision de l'horloge interne de l'équipement et/ou du serveur peut être typiquement de l'ordre de 0.06%. Afin de palier à tout phénomène éventuel de dérive temporelle entre l'horloge interne de l'équipement et l'horloge interne du serveur, le procédé de fourniture de preuve de présence peut également comprendre une étape de resynchronisation temporelle du serveur 20 avec l'équipement 10. Par exemple, cette resynchronisation peut être effectuée lorsqu'un utilisateur scanne à bref délai deux codes matriciels de validation différents.

On peut également définir des périodes de tolérance, éventuellement réglables, applicable à chaque transition de l'index temporel INDT_B calculé par le serveur 20. Ces périodes de tolérance peuvent avoir par exemple une durée de l'ordre de quelques secondes ou de quelques dizaines de secondes. La durée des périodes de tolérance peut être choisie ou calculée en fonction de la précision des horloges internes de l'équipement et/ou du serveur, ainsi qu'en fonction de la fréquence moyenne de scan du code matriciel de validation. Avantageusement, la durée des périodes de tolérance peut être réglable sur le serveur et ne requière aucune intervention sur l'équipement 10 et ou sur le terminal de communication 30. Si le serveur 20 reçoit un index temporel INDT correspondant à un index temporel INDT_B antérieur ou postérieur pendant la période de tolérance, on pourra conclure qu'il existe une désynchronisation temporelle entre le serveur et l'équipement et procéder à une resynchronisation.

Avantageusement, lorsqu'une donnée d'horodatage indiquant l'heure à laquelle le code matriciel de validation a été scanné est transmise du terminal de communication 30 au serveur 20 lors de l'étape de validation E4, la sous-étape E45 peut être effectuée au terme d'un délai quelconque suivant la sous étape E41. Sur la base de la donnée d'horodatage, le serveur 20 peut déterminer quel code matriciel de validation était affiché sur l'équipement 10 à l'instant où il a été scanné. Cela permet de compenser un éventuel décalage temporel entre l'exécution des sousétapes E41 et E45.

L'invention pourra être appliquée à différents cas d'usage. Par exemple l'invention peut être utilisée dans les cas suivants :
- pour valider une intervention de maintenance sur un site,
- pour valider le bon déroulement d'une tournée auprès de différents lieux prédéfinis,
- pour le pointage de personnel détaché,
- pour prouver le dépôt d'un colis à un emplacement en l'absence du destinataire,
- pour prouver ou signaler la présence ou le passage d'une personne, notamment un transporteur, à un lieu prédéfini tel qu'un lieu d'habitation ou une entreprise,
- pour remplacer une sonnette ou un interphone à l'entrée d'une habitation.

## Revendications

1. Procédé de fourniture de preuve de présence à un emplacement prédéfini, qui comprend :
• une étape d'initialisation (E1) durant laquelle des données d'initialisation d'un équipement (10) numérique sont transmises à un serveur (20), l'équipement étant installé audit emplacement prédéfini, l'équipement étant pourvu d'un écran (12) apte à afficher un code matriciel, les données d'initialisation comprenant :
∘ un index de démarrage (INDD),
∘ au moins un paramètre de calcul (INCA),
∘ une donnée de fréquence de rafraîchissement (FMIN), puis
• une étape de calcul (E2) itératif par l'équipement, selon la fréquence de rafraîchissement (FMIN), d'un index temporel (INDT), l'index temporel (INDT) étant égal au résultat d'une opération basée sur l'au moins un paramètre de calcul (INCA) et sur l'index temporel (INDT) calculé lors d'une précédente itération de l'étape de calcul (E2), une valeur initiale de l'index temporel (INDT) étant égale au résultat d'une opération basée sur l'au moins un paramètre de calcul (INCA) et sur l'index de démarrage (INDD), puis
• une étape d'affichage (E3) d'un code matriciel de validation sur l'écran de l'équipement, le code matriciel de validation comprenant l'index temporel (INDT) calculé, puis
• une étape de validation (E4) d'une présence à l'emplacement prédéfini comprenant :
∘ une sous-étape de scan (E41) du code matriciel de validation affiché sur l'écran de l'équipement au moyen d'un terminal de communication (30), puis
∘ une sous-étape de transmission (E42) au serveur, par le terminal de communication, de l'index temporel (INDT) issu du code matriciel de validation scanné.

2. Procédé de fourniture de preuve de présence selon la revendication précédente, **caractérisé en ce que** le code matriciel de validation comprend en outre une adresse informatique du serveur.

3. Procédé de fourniture de preuve de présence selon l'une des revendications précédentes, **caractérisé en ce que** l'étape d'initialisation (E1) comprend une sous-étape de transmission (E13) au serveur (20) des données d'initialisation au moyen d'un terminal de communication, notamment un smartphone.

4. Procédé de fourniture de preuve de présence selon l'une des revendications précédentes, **caractérisé en ce que** l'étape d'initialisation (E1) comprend :
• une sous-étape d'affichage (E11) sur l'écran (12) de l'équipement (10) d'un code matriciel d'initialisation comprenant une adresse informatique du serveur et lesdites données d'initialisation, puis
• une sous-étape de scan (E12) par un terminal de communication (30) du code matriciel d'initialisation, puis
• une sous-étape de transmission (E13) au serveur (20), par le terminal de communication, des données d'initialisation issues du code matriciel d'initialisation scanné.

5. Procédé de fourniture de preuve de présence selon la revendication précédentes, **caractérisé en ce que** l'étape d'initialisation (E1) est automatiquement exécutée dès la mise sous tension de l'équipement (10), ladite sous-étape d'affichage (E11) ayant une durée prédéfinie, notamment une durée comprise entre dix secondes et dix minutes inclues.

6. Procédé de fourniture de preuve de présence selon l'une des revendications précédentes, **caractérisé en ce que** l'index de démarrage (INDD) et/ou l'au moins un paramètre de calcul (INCA) est défini aléatoirement par l'équipement (10).

7. Procédé de fourniture de preuve de présence selon l'une des revendications précédentes, **caractérisé en ce qu'**il comprend une étape de cryptage (E10) par l'équipement (10) des données d'initialisation, notamment selon un cryptage XOR ou AES, puis une étape de décryptage (E14) par le serveur (20) des données d'initialisation reçues,
et/ou
**en ce qu'**il comprend une étape de cryptage (E21) par l'équipement (10) de l'index temporel calculé, notamment selon un cryptage XOR ou AES, puis une étape de décryptage (E44) par le serveur (20) de l'index temporel reçu.

8. Procédé de fourniture de preuve de présence selon l'une des revendications précédentes, **caractérisé en ce que** les données d'initialisation et/ou le code matriciel de validation comprennent une valeur de tension (TP) d'un moyen de stockage d'énergie (15) de l'équipement (10).

9. Procédé de fourniture de preuve de présence selon l'une des revendications précédentes, **caractérisé en ce que** l'étape d'initialisation (E1) et/ou l'étape de validation (E4) d'une présence à l'emplacement prédéfini comprend en outre la transmission au serveur, par le terminal de communication (30), d'un identifiant du terminal de communication (30) et/ou d'un identifiant d'un utilisateur du terminal de communication et/ou d'un identifiant de l'équipement (10) et/ou d'une donnée d'horodatage indiquant l'heure à laquelle le code matriciel a été scanné.

10. Procédé de fourniture de preuve de présence selon l'une des revendications précédentes, **caractérisé en ce que** l'étape de validation (E4) d'une présence à l'emplacement prédéfini comprend une sous-étape de comparaison (E45) par le serveur de l'index temporel (INDT) reçu du terminal de communication (30) avec un index temporel (INDT_B) calculé par le serveur (20) selon une méthode identique à celle employée par l'équipement (10) pour calculer l'index temporel (INDT) lors de ladite étape de calcul (E2).

11. Equipement (10) numérique comprenant un écran (12) apte à afficher un code matriciel dynamique, un moyen de stockage d'énergie (15) et des moyens matériels et logiciels configurés pour:
- générer aléatoirement au moins un paramètre de calcul (INCA) et un index de démarrage (INDD), et pour
- calculer itérativement, selon une fréquence de rafraîchissement (FMIN), un index temporel (INDT), l'index temporel (INDT) étant égal au résultat d'une opération basée sur l'au moins un paramètre de calcul (INCA) et sur un index temporel (INDT) calculé lors d'une précédente itération, une valeur initiale de l'index temporel (INDT) étant égale à l'index de démarrage (INDD), l'équipement (10) numérique étant configuré pour mettre en oeuvre les étapes du procédé de la revendication 1 mises en oeuvre par l'équipement (10) numérique de la revendication 1.

12. Equipement (10) selon la revendication précédente, **caractérisé en ce qu'**il comprend :
- un dispositif d'affichage à encre électronique, et/ou
- un moyen de production d'énergie électrique, notamment un moyen photovoltaïque, et/ou
- des moyens de fixation (11) destinés à coopérer avec un support, les moyens de fixation étant configurés de sorte qu'une manipulation des moyens de fixation pour désolidariser l'équipement (10) du support entraîne une déconnexion du moyen de stockage d'énergie (15).

13. Système de fourniture de preuves de présence (1) comprenant un serveur (20), et un équipement (10) pourvu d'un écran (12) apte à afficher un code matriciel dynamique et/ou un équipement (10) selon l'une des revendications 11 ou 12, l'équipement et le serveur comprenant des moyens matériels et logiciels configurés pour mettre en œuvre les étapes du procédé de fourniture de preuve de présence selon l'une des revendications 1 à 10 réalisées par l'équipement et le serveur des revendications 1 à 10.

14. Produit programme d'ordinateur comprenant des instructions de code de programme enregistrées sur un support lisible par ordinateur pour mettre en œuvre les étapes du procédé de fourniture de preuve de présence selon l'une quelconque des revendications 1 à 10 lorsque ledit programme fonctionne sur un ordinateur.

15. Support d'enregistrement de données, lisible par un ordinateur, sur lequel est enregistré un programme d'ordinateur comprenant des instructions de code de programme de mise en œuvre du procédé de fourniture de preuve de présence selon l'une des revendications 1 à 10.

## Patentansprüche

1. **Verfahren** zur Erbringung eines Anwesenheitsnachweises an einem vordefinierten Standort, umfassend:
• einen Initialisierungsschritt (E1), bei dem Initialisierungsdaten eines digitalen Geräts (10) an einen Server (20) übermittelt werden, wobei das Gerät an dem vordefinierten Standort installiert ist, das Gerät mit einem Bildschirm (12) ausgestattet ist, der geeignet ist, einen Matrix-Code anzuzeigen, wobei die Initialisierungsdaten umfassen:
∘ einen Startindex (INDD),
∘ mindestens einen Berechnungsparameter (INCA),
∘ einen Aktualisierungsfrequenzwert (FMIN), dann
• einen Schritt der iterativen Berechnung (E2) eines Zeitindex (INDT) durch das Gerät gemäß der Aktualisierungsfrequenz (FMIN), wobei der Zeitindex (INDT) gleich dem Ergebnis einer Operation ist, die auf dem mindestens einen Berechnungsparameter (INCA) und auf dem bei einer vorherigen Iteration des Berechnungsschritts (E2) berechneten Zeitindex (INDT) basiert, wobei ein Anfangswert des Zeitindex (INDT) gleich dem Ergebnis einer Operation ist, die auf dem mindestens einen Berechnungsparameter (INCA) und auf dem Startindex (INDD) basiert, dann
• einen Anzeigenschritt (E3) eines Validierungs-Matrix-Codes auf dem Bildschirm des Geräts, wobei der Validierungs-Matrix-Code den berechneten Zeitindex (INDT) umfasst, dann
• einen Validierungsschritt (E4) einer Anwesenheit am vordefinierten Standort, umfassend:
∘ einen Teilschritt des Scannens (E41) des auf dem Bildschirm des Geräts angezeigten Validierungs-Matrix-Codes mittels eines Kommunikationsendgeräts (30), dann
∘ einen Übertragungsteilschritt (E42) an den Server durch das Kommunikationsendgerät des Zeitindex (INDT), der aus dem gescannten Validierungs-Matrix-Code stammt.

2. Verfahren zur Erbringung eines Anwesenheitsnachweises nach dem vorhergehenden Anspruch, **dadurch gekennzeichnet, dass** der Validierungs-Matrix-Code ferner eine Computeradresse des Servers umfasst.

3. Verfahren zur Erbringung eines Anwesenheitsnachweises nach einem der vorhergehenden Ansprüche, **dadurch gekennzeichnet, dass** der Initialisierungsschritt (E1) einen Teilschritt der Übertragung (E13) der Initialisierungsdaten an den Server (20) mittels eines Kommunikationsendgeräts, insbesondere eines Smartphones, umfasst.

4. Verfahren zur Erbringung eines Anwesenheitsnachweises nach einem der vorhergehenden Ansprüche, **dadurch gekennzeichnet, dass** der Initialisierungsschritt (E1) umfasst:
• einen Anzeigeteilschritt (E11) auf dem Bildschirm (12) des Geräts (10) eines Initialisierungs-Matrix-Codes, der eine Computeradresse des Servers und die genannten Initialisierungsdaten umfasst, dann
• einen Scan-Teilschritt (E12) durch ein Kommunikationsendgerät (30) des Initialisierungs-Matrix-Codes, dann
• einen Übertragungsteilschritt (E13) an den Server (20) durch das Kommunikationsendgerät der Initialisierungsdaten, die aus dem gescannten Initialisierungs-Matrix-Code stammen.

5. Verfahren zur Erbringung eines Anwesenheitsnachweises nach dem vorhergehenden Anspruch, **dadurch gekennzeichnet, dass** der Initialisierungsschritt (E1) automatisch beim Einschalten des Geräts (10) ausgeführt wird, wobei der genannte Anzeigeteilschritt (E11) eine vordefinierte Dauer hat, insbesondere eine Dauer zwischen zehn Sekunden und zehn Minuten einschließlich.

6. Verfahren zur Erbringung eines Anwesenheitsnachweises nach einem der vorhergehenden Ansprüche, **dadurch gekennzeichnet, dass** der Startindex (INDD) und/oder der mindestens eine Berechnungsparameter (INCA) vom Gerät (10) zufällig definiert wird.

7. Verfahren zur Erbringung eines Anwesenheitsnachweises nach einem der vorhergehenden Ansprüche, **dadurch gekennzeichnet, dass** es einen Verschlüsselungsschritt (E10) der Initialisierungsdaten durch das Gerät (10), insbesondere gemäß einer XOR- oder AES-Verschlüsselung, sowie einen Entschlüsselungsschritt (E14) der empfangenen Initialisierungsdaten durch den Server (20) umfasst, und/oder dadurch, dass es einen Verschlüsselungsschritt (E21) des berechneten Zeitindex durch das Gerät (10), insbesondere gemäß einer XOR- oder AES-Verschlüsselung, sowie einen Entschlüsselungsschritt (E44) des empfangenen Zeitindex durch den Server (20) umfasst.

8. Verfahren zur Erbringung eines Anwesenheitsnachweises nach einem der vorhergehenden Ansprüche, **dadurch gekennzeichnet, dass** die Initialisierungsdaten und/oder der Validierungs-Matrix-Code einen Spannungswert (TP) eines Energiespeichermittels (15) des Geräts (10) umfassen.

9. Verfahren zur Erbringung eines Anwesenheitsnachweises nach einem der vorhergehenden Ansprüche, **dadurch gekennzeichnet, dass** der Initialisierungsschritt (E1) und/oder der Validierungsschritt (E4) einer Anwesenheit am vordefinierten Standort ferner die Übertragung an den Server durch das Kommunikationsendgerät (30) einer Kennung des Kommunikationsendgeräts (30) und/oder einer Kennung eines Benutzers des Kommunikationsendgeräts und/oder einer Kennung des Geräts (10) und/oder eines Zeitstempeldatums, das die Uhrzeit angibt, zu der der Matrix-Code gescannt wurde, umfasst.

10. Verfahren zur Erbringung eines Anwesenheitsnachweises nach einem der vorhergehenden Ansprüche, **dadurch gekennzeichnet, dass** der Validierungsschritt (E4) einer Anwesenheit am vordefinierten Standort einen Vergleichsteilschritt (E45) durch den Server des vom Kommunikationsendgerät (30) empfangenen Zeitindex (INDT) mit einem Zeitindex (INDT_B) umfasst, der vom Server (20) nach einer mit der vom Gerät (10) zur Berechnung des Zeitindex (INDT) in dem genannten Berechnungsschritt (E2) verwendeten Methode identischen Methode berechnet wurde.

11. Digitales Gerät (10), umfassend einen Bildschirm (12), der geeignet ist, einen dynamischen Matrix-Code anzuzeigen, ein Energiespeichermittel (15) sowie Hard- und Softwaremittel, die konfiguriert sind, um:
- mindestens einen Berechnungsparameter (INCA) und einen Startindex (INDD) zufällig zu generieren, und
- iterativ gemäß einer Aktualisierungsfrequenz (FMIN) einen Zeitindex (INDT) zu berechnen, wobei der Zeitindex (INDT) gleich dem Ergebnis einer Operation ist, die auf dem mindestens einen Berechnungsparameter (INCA) und auf einem bei einer vorherigen Iteration berechneten Zeitindex (INDT) basiert, wobei ein Anfangswert des Zeitindex (INDT) gleich dem Startindex (INDD) ist, wobei das digitale Gerät konfiguriert ist, die vom digitalen Gerät (10) aus Anspruch 1 durchzuführenden Verfahrensschritte auszuführen.

12. Gerät (10) nach dem vorhergehenden Anspruch, **dadurch gekennzeichnet, dass** es umfasst:
- eine Anzeigevorrichtung mit elektronischer Tinte, und/oder
- ein elektrisches Energieerzeugungsmittel, insbesondere ein photovoltaisches Mittel, und/oder
- Befestigungsmittel (11), die dazu bestimmt sind, mit einem Träger zusammenzuwirken, wobei die Befestigungsmittel so konfiguriert sind, dass eine Handhabung der Befestigungsmittel zur Trennung des Geräts (10) vom Träger eine Unterbrechung der Verbindung des Energiespeichermittels (15) bewirkt.

13. System zur Erbringung von Anwesenheitsnachweisen (1), umfassend einen Server (20) und ein Gerät (10), das mit einem Bildschirm (12) ausgestattet ist, der geeignet ist, einen dynamischen Matrix-Code anzuzeigen, und/oder ein Gerät (10) nach einem der Ansprüche 11 oder 12, wobei das Gerät und der Server Hard- und Softwaremittel umfassen, die konfiguriert sind, die vom Gerät und dem Server durchzuführenden Schritte des Verfahrens zur Erbringung eines Anwesenheitsnachweises nach einem der Ansprüche 1 bis 10 auszuführen.

14. Computerprogrammprodukt, umfassend Programmcodeanweisungen, die auf einem computerlesbaren Träger gespeichert sind, zur Implementierung der Schritte des Verfahrens zur Erbringung eines Anwesenheitsnachweises nach einem der Ansprüche 1 bis 10, wenn das genannte Programm auf einem Computer ausgeführt wird.

15. Datenspeicherträger, lesbar durch einen Computer, auf dem ein Computerprogramm gespeichert ist, das Programmcodeanweisungen zur Implementierung des Verfahrens zur Erbringung eines Anwesenheitsnachweises nach einem der Ansprüche 1 bis 10 umfasst.

## Claims

1. Method for providing proof of presence at a predefined location, comprising :
• an initializing step (E1) during which initialization data of a digital device (10) are transmitted to a server (20), the device being installed at said predefined location, the device being provided with a screen (12) able to display a matrix barcode, the initialization data comprising:
∘ a start index (INDD),
∘ at least one computational parameter (INCA),
∘a datum on refresh frequency (FMIN), then
• a computing step (E2) in which the device iteratively computes, at the refresh frequency (FMIN), a time index (INDT), the time index (INDT) being equal to the result of an operation based on the at least one computational parameter (INCA) and on the time index (INDT) computed in a preceding iteration of the computing step (E2), an initial value of the time index (INDT) being equal to the result of an operation based on the at least one computational parameter (INCA) and on the start index (INDD), then
• a step (E3) of displaying a validation matrix barcode on the screen of the device, the validation matrix barcode comprising the computed time index (INDT), then
• a step (E4) of validating a presence at the predefined location comprising:
∘ a substep (E41) of scanning the validation matrix barcode displayed on the screen of the device by means of a communication terminal (30), then
∘ a transmitting substep (E42) in which the communication terminal transmits to the server the time index (INDT) obtained from the scanned validation matrix barcode.

2. Method for providing proof of presence according to the preceding claim, **characterized in that** the validation matrix barcode furthermore comprises a computer address of the server.

3. Method for providing proof of presence according to one of the preceding claims, **characterized in that** the initializing step (E1) comprises a transmitting substep (E13) in which the communication terminal, especially a smartphone, transmits to the server (20) the initialization data.

4. Method for providing proof of presence according to one of the preceding claims, **characterized in that** the initializing step (E1) comprises:
• a substep (E11) of displaying, on the screen (12) of the device (10), an initialization matrix barcode comprising a computer address of the server and said initialization data, then
• a scanning substep (E12) in which a communication terminal (30) scans the initialization matrix barcode, then
• a transmitting substep (E13) in which the communication terminal transmits to the server (20) the initialization data obtained from the scanned initialization matrix barcode.

5. Method for providing proof of presence according to the preceding claim, **characterized in that** the initializing step (E1) is executed automatically as soon as the device (10) is supplied with power, said displaying substep (11) having a predefined duration, and especially a duration comprised between ten seconds and ten minutes inclusive.

6. Method for providing proof of presence according to one of the preceding claims, **characterized in that** the start index (INDD) and/or the at least one computational parameter (INCA) is defined randomly by the device (10).

7. Method for providing proof of presence according to one of the preceding claims, **characterized in that** it comprises an encrypting step (E10) in which the device (10) encrypts the initialization data, especially using XOR or AES encryption, then a decrypting step (E14) in which the server (20) decrypts the received initialization data, and/or
**in that** it comprises an encrypting step (E21) in which the device (10) encrypts the computed time index, especially using XOR or AES encryption, then a decrypting step (E44) in which the server (20) decrypts the received time index.

8. Method for providing proof of presence according to one of the preceding claims, **characterized in that** the initialization data and/or the validation matrix barcode comprise(s) a voltage value (TP) of a power storage means (15) of the device (10).

9. Method for providing proof of presence according to one of the preceding claims, **characterized in that** the initializing step (E1) and/or the step (E4) of validating a presence at the predefined location furthermore comprises the transmission, to the server, by the communication terminal (30), of an identifier of the communication terminal (30) and/or of an identifier of a user of the communication terminal and/or of an identifier of the device (10) and/or a timestamp data indicating at which time the matrix barcode was scanned.

10. Method for providing proof of presence according to one of the preceding claims, **characterized in that** the step (E4) of validating a presence at the predefined location comprises a comparing substep (E45) in which the server compares the time index (INDT) received from the communication terminal (30) with a time index (INDT_B) computed by the server (20) using a method identical to that employed by the device (10) to compute the time index (INDT) in said computing step (E2).

11. Digital device (10) comprising a screen (12) able to display a dynamic matrix barcode, a power storage means (15) and hardware and software means configured to:
- randomly generate at least one computational parameter (INCA) and a start index (INDD), and to
- iteratively compute, at a refresh frequency (FMIN), a time index (INDT), the time index (INDT) being equal to the result of an operation based on the at least one computational parameter (INCA) and on a time index (INDT) computed in a preceding iteration, an initial value of the time index (INDT) being equal to the start index (INDD), the digital device being configured to carry out the steps of the method of claim 1 that are performed by the digital device (10) of claim 1.

12. Device (10) according to the preceding claim, **characterized in that** it comprises :
- a display device utilizing electronic ink, and/or
- a mean for generating electrical power, and especially a photovoltaic means, and/or
- fastening means (11) intended to interact with a holder, the fastening means being configured so that manipulation of the fastening means with a view to detaching the device (10) from the holder results in a disconnection of the power storage means (15).

13. System (1) for providing proofs of presence, comprising a server (20), and a device (10) provided with a screen (12) able to display a dynamic matrix barcode and/or a device (10) according to one of Claims 11 or 12, the device and the server comprising hardware and software means configured to implement a method for providing proof of presence according to one of Claims 1 to 10 that are performed by the device and the servers of claims 1 to 10.

14. Computer program product comprising program-code instructions stored on a computer-readable medium, for implementing the steps of the method for providing proof of presence according to any one of Claims 1 to 10 when said program is run on a computer.

15. Computer-readable data storage medium on which is stored a computer program comprising program-code instructions for implementing the method for providing proof of presence according to one of Claims 1 to 10.
